# EUROPEAN PATENT SPECIFICATION

(11) **EP 3 434 631 B1**
(45) Date of publication and mention of the grant of the patent: **09.11.2022**
(21) Application number: 18185042.1
(22) Date of filing: 23.07.2018
(51) Int. Cl.: B65G 47/51

(54) **METHOD OF HANDLING AND ROUTING OF PRODUCTS IN A PLANT FOR PRODUCTION OF SAID PRODUCTS AND PLANT**
VORRICHTUNG ZUR HANDHABEN UND LEITUNG VON PRODUKTEN IN EINER ANLAGE ZUR HERSTELLUNG DER BESAGTEN PRODUKTE UND ANLAGE
PROCÉDÉ DE GESTION ET D'ACHEMINEMENT DE PRODUITS DANS UNE INSTALLATION DE PRODUCTION DE CES PRODUITS ET INSTALLATION

(30) Priority: 27.07.2017 IT 201700086234
(43) Date of publication of application: 30.01.2019
(73) Proprietor: SACMI PACKAGING & CHOCOLATE S.P.A., 40026 Imola (BO) (IT)
(72) Inventor: Fontana, Gianluca, I-12051 ALBA (CN) (IT); Lumini, Franco, I-20135 MILANO (MI) (IT)
(74) Representative: Negrini, Elena

(56) References cited:
- EP-A1- 2 421 778
- EP-A1- 2 604 553
- WO-A1-95/21116
- FR-A1- 2 125 459
- US-A- 4 684 118

## Description

The present invention relates to the sector concerning the processing of products and in particular the handling and routing of these products during the processing processes to which said products are subjected in a plant and refers to a method of movement and routing of produced in a processing plant of such products and refers to such processing plant of products where such method and plant can be destined to the processing of food products, such as those based on chocolate or other fats, or other nature or species.

The prior document EP 2 421 778 discloses a plant having the characteristics of the preamble of claim 1.

There are known plants provided with, for example, a main line, straight and unidirectional, for processing or working of products having at one end an entry for semi-finished products, raw materials or molds for containing and processing said products leaving the main line, after having undergone corresponding processes and/or treatments; the opposite end of the main line is provided with an outlet towards a transfer device which directs the products towards an inlet of a secondary processing line placed at one end of this rectilinear and unidirectional transporter whose opposite end has a corresponding outlet which releases products, which have received a main processing phase and a secondary processing phase, on an escape conveyor belt and which transfers with a second transfer unit, the molds for processing products at the beginning of the main line.

Such known plants, while being simple and inexpensive, have the disadvantage of being extremely bulky requiring a very expensive and wide surface.

Another disadvantage consists in the fact that the optional machining areas that can be made inside the main or secondary line must however be crossed by products or molds for the processing of products, requiring a greater number of molds and a longer crossing time of products.

An object of the present invention is to propose a device fit for reducing and optimizing the installation and operating surface.

Another object is to propose a plant equipped with a main branch and a secondary branch of optional processing and equipped with a single outlet branch for products coming from the first branch or having gone along both the main and secondary branches.

A further purpose is to propose a versatile and adaptable device for different needs and for numerous productive and industrial sectors.

The characteristics of the invention are shown below with particular reference to the attached drawings in which:
- Figure 1 shows a schematic, partial and plan view of the processing plant of products, object of the present invention, in a first operating condition in which the main and optional processes are carried out;
- Figure 2 shows a schematic, partial and plan view of the processing plant for products of Figure 1 in a second operating condition in which only the main processes are carried out;
- Figures 3 and 4 show views respectively from one side and from the other side of a routing device of the plant of Figure 1, where said device is associated with a portion of a secondary branch of the plant;
- Figure 5 shows a view from a different side of a portion of the routing device of Figure 3;
- Figures 6-10 show side views of the routing device of Figure 3 at respective functional states.

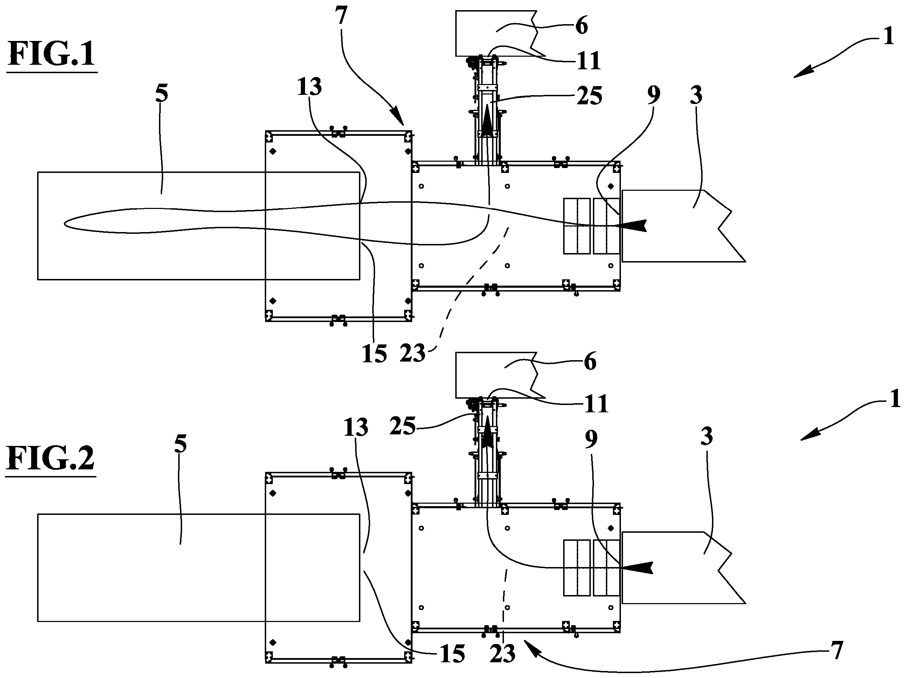

With reference to the plant of the enclosed figures, in particular in Figures 1 and 2, the handling and routing method of products, object of the present invention, is hereinafter described. Here and in the following of the present document the term product indicates one or more raw products worked and/or processed in the plant and is likewise indicated a container, support, tray or mold bearing one or more products.

By way of example, the illustrated plant refers to food formation of chocolate or of similar edible materials where the products are contained in semi-molds and in molds each consisting of two half-molds. This plant includes at least one primary branch for one or more main processes or treatments of the products; for example, this primary branch transports the semi-molds each of which bears the pits which are filled, by dispensers of the primary branch, of melted chocolate.

The plant further comprises a routing device having its first inlet facing the outlet of the primary branch from which it picks up the products which in this step consist of the half-shells whose pits are filled or partially filled with melted chocolate; immediately downstream of the inlet of the routing device, an apparatus known as "Book Folding" superimposes to the filled semi-mold a second half-mold with complementary pits, carrying out a forming mold, for example of hollow chocolate eggs or the primary branch provides, at inlet of routing device, molds or trays containing solid or not hollow chocolates. As seen, in the present context the term product also refers to semi-molds, to complete molds, to products contained therein or loose products or products supported by trays, containers, boxes and the like.

A first outlet of the routing device faces the entrance of a transfer branch of the plant to which it transfers the products to subsequent processing steps, for example, of cream and/or bottom depositing or of wrappings and packaging.

A second outlet of the routing device faces the entrance of a secondary branch of the plant and a second inlet of said routing device faces an outlet of the secondary branch for the corresponding passages of products from the routing device to the secondary branch and vice versa.

The secondary branch is destined to perform one or more processes or treatments of products; for example, returning to the exemplary case of products consisting of molds with pits containing melted chocolate to make eggs or other hollow foods, this secondary branch may comprise a ring conveyor, of chain type or the like, with two long horizontal sections, defining the moving direction of products, superimposed and joined to the ends by vertical or curved sections where said conveyor is provided, for example, with a plurality of product carriers 42 consisting, in this example, of rotary die holders with several axis intended to subject the rotational molds that cause the chocolate to be distributed onto the inner faces of pits, producing the hollow eggs as a result of cooling and consolidation of chocolate.

The method provides to:
- use the primary branch having a respective moving direction of the products made available at its exit;
- use the secondary branch of the kind having a longitudinal extension and a mainly straight and elongated moving direction of products and having respective inlet and outlet of products placed at the same end of this extension or in correspondence with a short vertical side of the chain conveyor of secondary branch;
- use a transfer branch of the linear kind inclined, perpendicular or preferably parallel to said longitudinal extension and having its own product inlet;
- use a routing device having its first inlet facing the outlet of the primary branch from which it picks up the products, a first outlet facing the inlet of the transfer branch to which it transfers the products and having a second outlet and a second inlet facing respectively the entrance and exit of the secondary branch for the corresponding product passages;
- routing, through the routing device, the products coming from the primary branch to the transfer branch.

The method provides that the product routing to transfer branch may be through the secondary branch, as illustrated in Figure 1 from the curved line with initial and final arrows or direct, or excluding the auxiliary branch from the product path, as illustrated in Figure 2; the routing through the secondary branch will take place when the products require the processing provided by the secondary branch, for example the spinning for the production of hollow eggs while the routing directed to the transfer branch will take place for products which do not require the passage through the branch secondary, as in the case of solid or non-hollow chocolates.

More generally through the routing device, the method provides to route the products coming from the primary branch to the transfer branch directly or through the secondary branch. The method also provides for moving the products on the primary branch perpendicularly or preferably parallel to the longitudinal extension of the secondary branch and on the transfer branch perpendicularly or preferably parallel to the linear development of the primary branch.

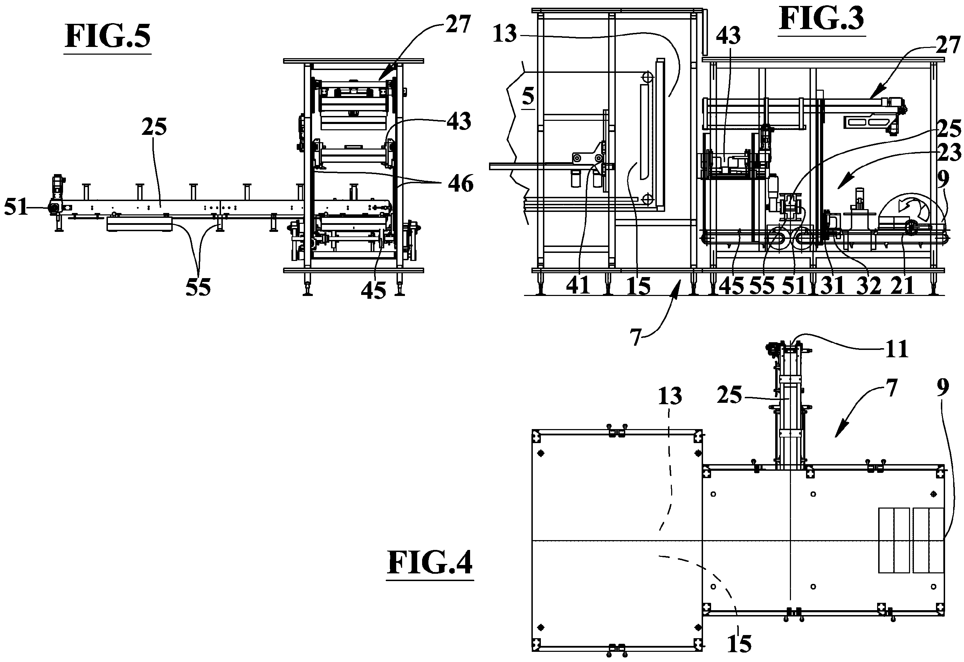

Referring now to all Figures 1-10, the product processing plant for the implementation of the above method comprises a primary branch 3 having a respective moving direction of the products which run it towards its exit and such plant comprises a secondary branch 5 of the type having a longitudinal extension and, for example, a plurality of product carriers 42.

These product carriers 42 are designed to move the products in a mainly straight and elongated bidirectional moving direction or with an elongated ring lying on a vertical plane.

Said movement of product carriers 42 can be carried out by a conveyor of the secondary branch of an elongated ring-like chain type with two horizontal main sides or portions, defining the longitudinal extension of the secondary branch and overlapping and two portions (of which at least 1 vertical) connecting the horizontal sides.

The secondary branch 5 is provided with an inlet and an outlet for products, said inlet and outlet are placed at the same end of this extension or are in correspondence with a vertical portion of the conveyor of the secondary branch 5.

The plant further comprises a linear transfer branch 6 having its own inlet for the products. The transfer branch 6 is shown in the figures oriented perpendicular to said longitudinal extension but can be inclined or preferably parallel to this extension.

The plant also comprises a routing device 7 having:
- a first inlet 9 facing the outlet of the primary branch 3 from which it picks up the products;
- a first outlet 11 facing the entrance of the transfer branch 6 to which it supplies the products;
- a second outlet 13 facing the entrance of the secondary branch 5 for passing the products from the routing device 7 to the product carriers 42 of the secondary branch 5;
- a second inlet 15 facing the outlet of the secondary branch 5 for passing the products from the product carriers 42 of the secondary branch 5 to the routing device 7;
- a switch means 23 which can be controlled to send the products to the first outlet 11 or to the second outlet 13;
- a picking up means 25 which transfers the products of the routing device 7 coming from the first inlet 9 or from the second inlet 15 towards the first outlet 11.

The first inlet 9 of the routing device 7 is provided with a first horizontal or near linear conveyor 21 afferent to the switch means 23 which comprises a motorized lifter 31 equipped with a vertically movable grab means 32 controlled by three conditions.

In the first condition, the grab means 32 is in a lower position in which it collects at least one of the products transported by the first linear conveyor 21. In the second condition the grab means 32 is in an upper position in which it delivers the at least one product to a feeding means 27 of the second outlet 13 by routing it towards the latter 13.

In the third condition the grab means 32 is lifted by the first linear conveyor 21 and does not interfere with the products of this first linear conveyor 21 by routing them towards the picking up means 25 of the first outlet 11 to deliver the products at the entrance of the transfer branch. 6.

The motorized lifter 31 may be of the type provided with a first vertical rack 34 or preferably of two fixed vertical racks 34, each placed at a respective side of the first linear conveyor 21. A respective pinion is engaged to each rack 34. Each pinion or each pair of pinions can be driven in rotation by a respective motor or gearmotor where the axis of each pinion and each motor or gearmotor is connected or fixed to the motorized lifter 31.

The feeding means 27 of the second outlet 13 comprises first support means 33 driven vertically movable under control, for example by means of pinions and racks in an equivalent manner to those for moving the motorized lifter 31. The racks of the feeding means 27 can be dedicated and exclusive of this means 27 or can be called first racks 34.

Said first support means 33 have, opposite and facing, a first sliding plane means 35 and a first pushing means 37, for example of the type provided with a linear actuator or equipped with a translation motor along a straight and horizontal rail of the first support means 33 or other known type and adapted to provide a horizontal translation thrust to the products.

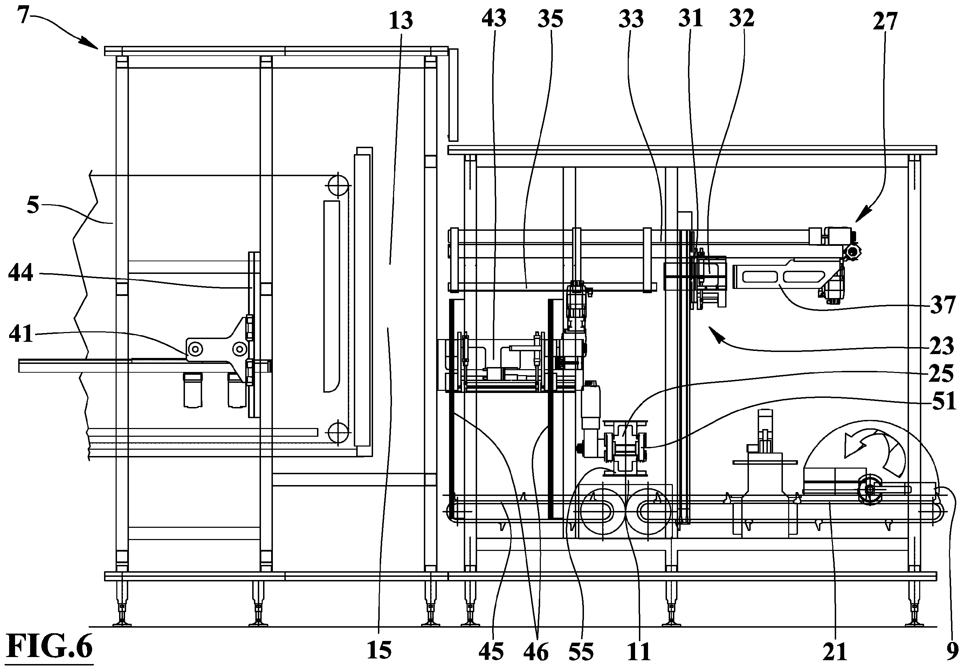

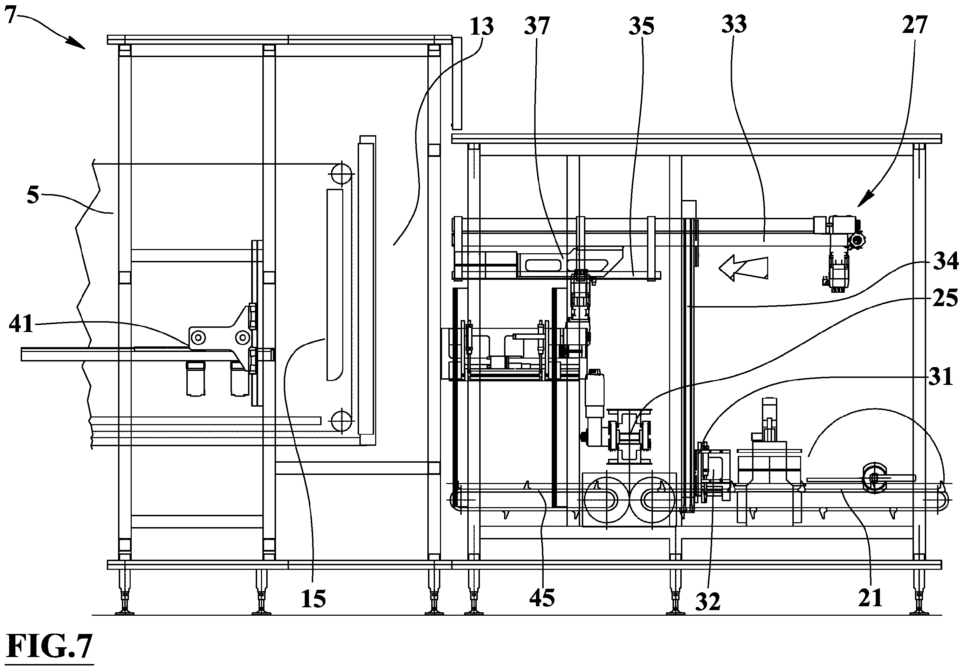

In a lower position of said first support means 33, as shown in Figure 6, the first sliding plane 35 is aligned with the grab means 32 in its upper position and the first pushing means 37 transfers the at least one product from grab means 32 on the first sliding plane 35 which can receive a product or, by means of several cycles of the grab means 32, multiple products placed side by side (as illustrated in Figure 7). While the first support means 33 translate vertically the first sliding plane 35 keeping it aligned with a product carrier 42 movable vertically in the vertical portion of the secondary branch 5 facing the second outlet 13 and corresponding to the entrance of the secondary branch 5, the first pushing means 37 transfers one or more products from the first sliding plane 35 to the product carrier 42 of the secondary branch 5.

The dimensions of the grab means 32 are such as to grasp and transport a product, for example a mold, while the dimensions of the first sliding plane 35 can be such as to accommodate a product or two or more products placed side by side and pushed therein into corresponding loading cycles made by the switch means 23. Consequently, the action of the first pushing means 37 will transfer one, two or more products or molds displaced side by side in each product carrier 42 or corresponding shaped die holders.

The second inlet 15 comprises a second pushing means 41 and a second sliding plane 43 driven and vertically movable on command and facing a vertical portion of the secondary branch 5 corresponding to the outlet of the secondary branch 5.

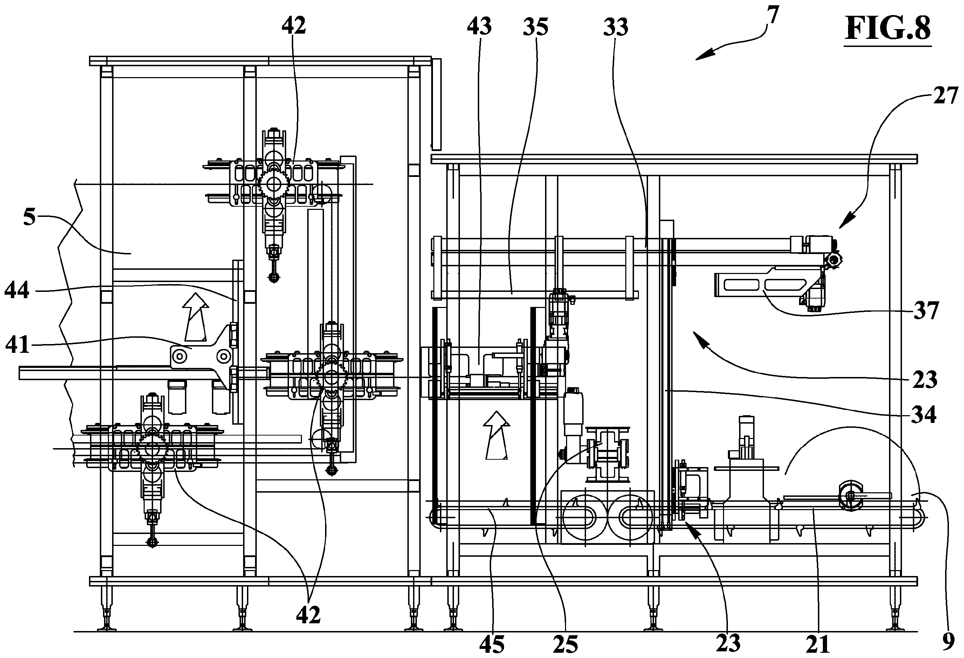

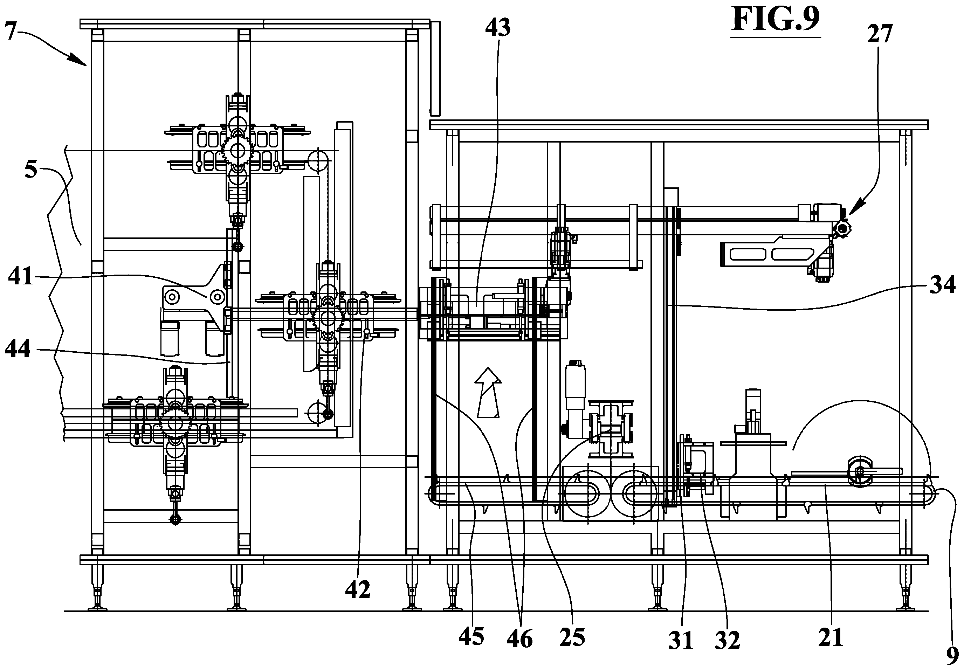

While the respective motorizations vertically translate the second pushing means 41 and the second sliding plane 43 keeping them aligned (as in Figure 8) to a product carrier 42 movable vertically in the outlet portion of the secondary branch 5 and containing one or more products, the second pushing means 41 is actuated and transfers one or more products from the product carrier 42 of the secondary branch to the second sliding plane 43 (as in Figure 9) which, when received one or more products, translates vertically and deposits said one or more products on a second linear conveyor 45, horizontal or almost horizontal, carrying to the picking up means 25.

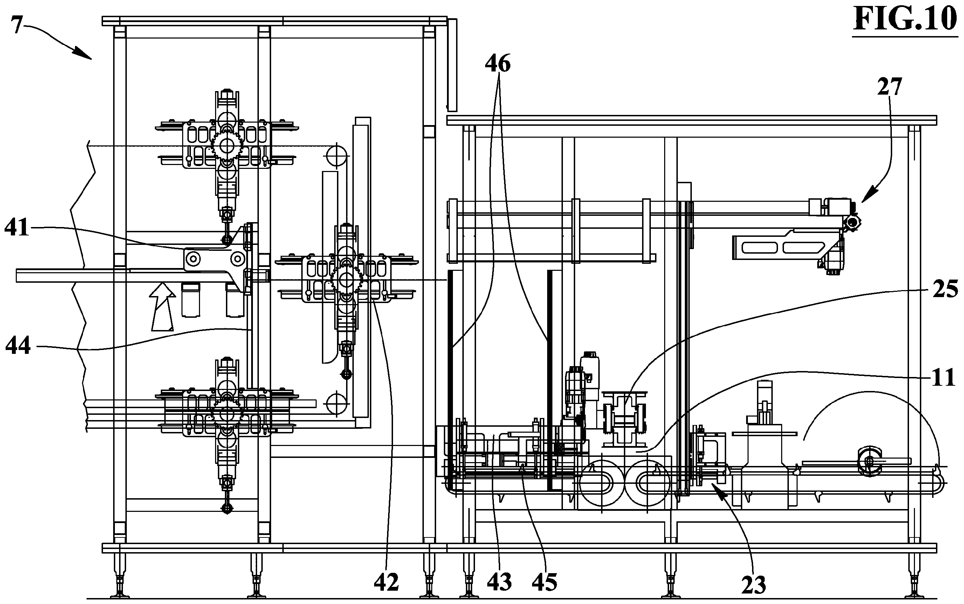

At the same time, the second pushing means 41 returns to its original position in a horizontal direction, continuing to move vertically synchronized with the product carrier 42 (as in Figure 10), subsequently positioning itself in its lower position awaiting resuming a cycle of ejection of product from successive product carrier 42.

The second pushing means 41 may be similar to the first pushing means or different from it.

The second pushing means 41 and the second sliding plane 43 can be provided with respective motors or gearmotors or pairs of motors or gearmotors which control the rotation of corresponding pinions or pairs of pinions engaging with respective vertical racks, single or preferably double or pairs of parallel racks, second 44 or third 46. In particular, the second sliding plane 43 can be provided with two vertical racks placed at one side of the second linear conveyor 45 and at two other vertical racks located at the opposite side of said second conveyor linear 45.

The picking up means 25 comprises an annular transport means 51 having an end adjacent the mutually facing outlet ends of the first linear conveyor 21 and the second linear conveyor 45 and the opposite end corresponding to the first outlet 11. The annular conveyor means 51, for example comprising a pair of side-by-side motorized belts or chains, may be provided with a plurality of protruding bracket arms 55 and translating from said outlet ends of the linear conveyors 21, 45 to the first outlet 11 for matching and transporting the products from said ends up to the first exit 11 to supply these products at the entrance of the transfer branch 6; alternatively, the picking up means 25 may comprise a pair of chains, or the like, positioned at the level of said conveyors, 21 and 45 then under the products during their transfer.

The first linear conveyor 21 and the second linear conveyor 45 are aligned and have opposite transport directions converging towards the respective and adjacent outlets and are below the second pushing means 41 and the second sliding plane 43 of the second inlet 15, to the feeding means 27 of the second outlet 13 and the picking up means 25.

The second pushing means 41 and the second sliding plane 43 of the second inlet 15 are below the first sliding plane 35 and the first pushing means 37 of the feeding means 27.

The switch means 23 extends vertically at least between the first linear conveyor 21 and the feeding means 27.

The inlet and outlet of the secondary branch 5 are placed respectively in the upper and lower parts of the vertical portion of the secondary branch 5 having the inlet and the outlet of the latter.

Product carriers 42 travel said vertical portion from bottom to top.

The system comprises position sensors of the product carriers 42 along said vertical inlet and outlet portion of the secondary branch 5 and sensors of vertical position of the first sliding plane 35 or of the first support means 33, of the second sliding plane 43 and/or of the second pushing means 41.

The system also includes position and/or speed detectors of the active and/or mobile organs of the same plant.

The plant includes digital and programmable control means provided with input ports for signals supplied by said sensors and detectors and with ports for control and/or activation of the active and/or mobile organs at least of the routing device 7 or of the whole plant.

The invention has been described with reference to a secondary branch 5 comprising a ring conveyor lying on a vertical plane (that is, with two horizontal portions and two vertical portions) but also provides for the possibility that said ring lies on a horizontal plane, in this case, the racks which determine the tracking directions will be horizontal.

## Claims

1. Working plant for products comprising a primary branch (3) which comprises an outlet and having a respective moving direction of the products going out from it; the plant comprises a secondary branch (5) of the kind having a longitudinal extension and a plurality of product carriers (42) for moving these products in a bidirectional moving direction mainly rectilinear and elongated or ring-shaped and provided with respective inlet and outlet for the products placed at the same end of such extension; the plant comprises a linear transfer branch (6) and having its own inlet for the products; and it comprises a routing device (7) having:
- a first inlet (9) facing the outlet of the primary branch (3) from which it receives the products;
- a first outlet (11) facing the inlet of the transfer branch (6) to which it supplies the products;
- a second outlet (13) facing the inlet of the secondary branch (5) for the passage of the products from the routing device (7) to the product carriers (42) of the secondary branch (5);
- a second inlet (15) facing the outlet of the secondary branch (5) for passing the products from the product carriers (42) of the secondary branch (5) to the routing device (7);
- a switch means (23) which can be controlled to send the products to the first outlet (11) or to the second outlet (13);
- a picking up means (25) which transfers the products of the routing device (7) coming from the first inlet (9) or from the second inlet (15) towards the first outlet (11);
wherein the first inlet (9) is provided with a first horizontal or almost horizontal linear conveyor (21), oriented towards the switch means (23); said plant being **characterized in that** the first horizontal or almost horizontal linear conveyor (21) comprises a motorized lifter (31) provided with a grab means (32) vertically movable on command between three conditions, a first condition in which the grab means (32) is in a lower position in which it is intended to collect at least one of the products carried by the first linear conveyor (21), a second condition wherein the grab means (32) is in an upper position in which it passes the at least one product to a feeding means (27) of the second outlet (13) routing the at least one product to the latter second outlet (13) and a third condition in which the grab means (32) is lifted with respect to the first linear conveyor (21) and does not interfere with the products of this latter (21) allowing the latter products to reach, in succession, the picking up means (25), the first outlet (11) and the inlet of the transfer branch (6).

2. Plant according to claim 1 **characterized in that** the feeding means (27) of the second outlet (13) comprises first motorized support means (33) movable vertically on command and having, opposite and facing, a first plane sliding means (35) and a first pushing means (37); in a lower position of said first support means (33) the first sliding plane (35) is aligned with the grab means (32) in its upper position and the first pushing means (37) transfers the at least one product from the grab means (32) to the first sliding plane (35) which can receive one or more side by side products; while the first support means (33) vertically translate the first sliding plane (35) keeping it aligned with a product carrier (42) vertically movable in a vertical portion of the secondary branch (5) facing the second outlet (13) and corresponding at the inlet of the secondary branch (5), the first pushing means (37) transfers one or more products from the first sliding plane (35) to the product carrier (42) of the secondary branch (5).

3. Plant according to claim 1 or 2 **characterized in that** it comprises digital and programmable control means provided with input ports for signals supplied by sensors and detectors of organs or parts of the routing device (7) or of all the plant for controlling and/or operating the moving and/or active members of at least the routing device (7).

4. Plant according to claim 3 **characterized in that** the second inlet (15) comprises a second pushing means (41) and a second sliding plane (43) both motorized and vertically movable under command of the control means and facing a vertical portion of the secondary branch (5) corresponding to outlet of secondary branch (5); the plant being further configured so that the control means actuate respective engines by vertically translating the second pushing means (41) and the second sliding plane (43) keeping them aligned with a product carrier (42) movable vertically in the exit section of the secondary branch (5) and containing one or more products, while the control means actuate the second pushing means (41) for transferring said one or more products from the product carrier (42) of the secondary branch to the second sliding plane (43), after the latter second sliding plane has received such one or more products, the control means sequentially control the vertical translation of the second sliding plane (43) and the advancement operation of the latter for discharging said one or more products onto a second linear conveyor (45) by routing them towards picking up means (25); meanwhile, the control means drive the synchronized displacements of the second pushing means (41) to bring it to its original position and to the product carrier (42), subsequently the control means control the displacement of the latter product carrier (42) positioning it in its lower position and the control means are waiting to resume a cycle of expulsion of product from the next product carrier (42).

5. Plant according to claim 3 **characterized in that** the picking up means (25) comprises an annular conveyor means (51) having a first end and a second end opposite to the first end; the first linear conveyor (21) and the second linear conveyor (45) have respective end outlets facing each other and adjacent to the first end of the annular conveyor means (51); the second end of the annular conveyor means (51) corresponds to the first outlet (11) and said annular conveyor means (51) is provided with a plurality of protruding bracket arms (55) and translating from said outlet ends of the linear conveyors (21, 45) to the first outlet (11) for matching and carrying the products from said ends up to the first outlet (11) to supply these products to the inlet of the transfer branch (6).

6. Plant according to claim 4 **characterized in that** the first linear conveyor (21) and second linear conveyor (45) are aligned and have conveying directions which are opposite and converging towards the respective and adjacent outlets and are below the second pushing means (41) and below the second sliding plane (43) of the second inlet (15), below the feeding means (27) of the second outlet (13) and below the picking up means (25); the second pushing means (41) and the second sliding plane (43) of the second inlet (15) are below the first sliding plane (35) and below the first pushing means (37) of the feeding means (27); the switch means (23) extends vertically at least between the first linear conveyor (21) and the feeding means (27); the inlet and outlet of the secondary branch (5) are placed respectively in the upper and lower parts of the vertical portion comprising the respective portions of the secondary branch (5) where the product carriers (42) run along said vertical portion from the bottom to the top.

7. Plant according to any of the previous claims **characterized in that** it comprises position sensors of the product carriers along said vertical portion of inlet and outlet of the secondary branch (5) and sensors of the vertical position of the first sliding plane (35) or of the first support means (33), of the second sliding plane (43) and/or of the second pushing means (41) and it comprises position and/or speed detectors of the movable and/or active members of the plant.

8. Method of handling and routing of semi-dies and/or dies for forming products such as foods of chocolate or similar materials in the plant of any of the previous claims comprising at least one primary branch (3) for one or more main processes or treatments of the products and a secondary branch (5) for one or more optional processes or treatments and a transfer branch (6) for the products; said method is **characterized by** the fact of:
- using the primary branch having a respective moving direction of the products made available at its outlet;
- using the ring-type secondary branch having a longitudinal extension and a moving direction of product which are mainly rectilinear and elongated and having respective inlet and outlet of products placed at the same end of this extension;
- using a linear transfer branch having its own product inlet;
- using a routing device (7) having its first inlet (9) facing the outlet of the primary branch from which it picks up the products, a first outlet (11) facing the inlet of the transfer branch to which it transfers the products and having a second outlet (13) and a second inlet (15) facing respectively the inlet and outlet of secondary branch for the corresponding passing of products;
- routing, by means of the routing device, the products coming from the primary branch towards the transfer branch or the secondary branch.

9. Method according to claim 8 **characterized by** the fact of routing, by means of the routing device, the products coming from the primary branch towards the transfer branch directly or through the secondary branch and/or of moving the products along the primary branch and along the transfer branch.

## Patentansprüche

1. Arbeitsanlage für Produkte, die einen primären Zweig (3) umfasst, der einen Auslass umfasst und eine entsprechende Bewegungsrichtung der aus ihm austretenden Produkte aufweist; die Anlage umfasst einen sekundären Zweig (5) der Art mit einer Längserstreckung und einer Mehrzahl von Produktträgem (42) zum Bewegen dieser Produkte in einer bidirektionalen Bewegungsrichtung, die im Wesentlichen geradlinig und länglich oder ringförmig ist, und ist mit einem entsprechenden Einlass und Auslass für die Produkte ausgestattet, die an demselben Ende einer solchen Verlängerung platziert sind; die Anlage umfasst einen linearen Transferzweig (6) und weist ihren eigenen Einlass für die Produkte auf; und sie umfasst eine Führungsvorrichtung (7) mit:
- einem ersten Einlass (9), der dem Auslass des primären Zweigs (3) zugewandt ist, von dem er die Produkte aufnimmt;
- einen ersten Auslass (11), der dem Einlass des Transferzweigs (6) zugewandt ist, an den er die Produkte liefert;
- einen zweiten Auslass (13), der dem Einlass des sekundären Zweigs (5) zugewandt ist, für den Durchlass der Produkte von der Führungsvorrichtung (7) an die Produktträger (42) des sekundären Zweigs (5);
- einen zweiten Einlass (15), der dem Auslass des sekundären Zweigs (5) zugewandt ist zum Durchleiten der Produkte von den Produktträgern (42) des sekundären Zweigs (5) an die Führungsvorrichtung (7);
- ein Schaltermittel (23), das steuerbar ist, um die Produkte an den ersten Auslass (11) oder an den zweiten Auslass (13) zu schicken;
- ein Aufgreifmittel (25), das die Produkte der Führungsvorrichtung (7), die von dem ersten Einlass (9) oder von dem zweiten Einlass (15) in Richtung des ersten Auslasses (11) kommen, übermittelt;
wobei der erste Einlass (9) mit einem ersten horizontalen oder nahezu horizontalen linearen Förderer (21) versehen ist, der in Richtung des Schaltermittels (23) ausgerichtet ist; und die Anlage ist **dadurch gekennzeichnet, dass** der erste horizontale oder nahezu horizontale lineare Förderer (21) einen motorisierten Heber (31) aufweist, der mit einem Greifmittel (32) versehen ist, das auf Befehl zwischen drei Zuständen vertikal bewegbar ist, einem ersten Zustand, in dem sich das Greifmittel (32) in einer unteren Position befindet, in dem es mindestens eines der Produkte aufnehmen soll, das von dem ersten linearen Förderer (21) getragen wird, einen zweiten Zustand, in dem sich das Greifmittel (32) in einer oberen Position befindet, in dem es das mindestens eine Produkt an ein Zuführmittel (27) des zweiten Auslasses (13) weitergibt und einen dritten Zustand, in dem das Greifmittel (32) bezogen auf den ersten linearen Förderer (21) angehoben wird und nicht in die Produkte des Letzteren eingreift, wodurch es letzteren Produkten ermöglicht wird, das Aufgreifmittel (25), den ersten Auslass (11) und den Einlass des Transferzweigs (6) nacheinander zu erreichen.

2. Anlage nach Anspruch 1, **dadurch gekennzeichnet, dass** das Zuführmittel (27) des zweiten Auslasses (13) erste motorisierte Stützmittel (33) umfasst, die auf Befehl vertikal bewegbar sind und gegenüberliegend und zugewandt ein Gleitmittel einer ersten Ebene (35) und ein erstes Schiebemittel (37) umfassen; in einer unteren Position des ersten Stützmittels (33) ist die erste Gleitebene (35) mit dem Greifmittel (32) in seiner oberen Position ausgerichtet und das erste Schiebemittel (37) befördert das mindestens eine Produkt von dem Greifmittel (32) zu der ersten Gleitebene (35), die eines oder mehr Produkte nebeneinander aufnehmen kann; während das erste Stützmittel (33) die erste Gleitebene (35) vertikal überträgt und sie dabei mit einem Produktträger (42) ausgerichtet hält, der vertikal in einem vertikalen Bereich des sekundären Zweigs (5) bewegbar ist, der dem zweiten Auslass (13) zugewandt ist und dem Einlass des sekundären Zweigs (5) entspricht, befördert das erste Schiebemittel (37) ein oder mehr Produkte von der ersten Gleitebene (35) an den Produktträger (42) des sekundären Zweigs (5).

3. Anlage nach Anspruch 1 oder 2, **dadurch gekennzeichnet, dass** sie digitale und programmierbare Steuermittel aufweist, die mit Eingabeanschlüssen für Signale versehen sind, die von Sensoren und Detektoren von Einheiten oder Teilen der Führungsvorrichtung (7) oder der gesamten Anlage zugeführt werden, um die sich bewegenden und/oder aktiven Elemente von zumindest der Führungsvorrichtung (7) zu steuern und/oder zu betreiben.

4. Anlage nach Anspruch 3, **dadurch gekennzeichnet, dass** der zweite Einlass (15) ein zweites Schiebemittel (41) und eine zweite Gleitebene (43) umfasst, die beide motorisiert sind und auf Befehl des Steuermittels vertikal bewegbar sind und einem vertikalen Bereich des sekundären Zweigs (5) zugewandt sind, der dem Auslass des sekundären Zweigs (5) entspricht; wobei die Anlage des Weiteren so konfiguriert ist, dass das Steuermittel entsprechende Motoren betätigt, indem sie das zweite Schiebemittel (41) und die zweite Gleitebene (43) vertikal überträgt unter Beibehaltung der Ausrichtung mit einem Produktträger (42), der vertikal in den Ausgangsbereich des sekundären Zweigs (5) bewegbar ist und ein oder mehr Produkte enthält, während das Steuermittel das zweite Schiebemittel (41) betätigt, um das eine oder mehr Produkte von dem Produktträger (42) des sekundären Zweigs zu der zweiten Gleitebene (43) zu befördern, nachdem letztere zweite Gleitebene eines oder mehr solcher Produkte aufgenommen hat, steuern die Steuermittel nacheinander die vertikale Verschiebung der zweiten Gleitebene (43) und den Weiterbetrieb Letzterer zum Ausgeben des einen oder mehrerer Produkte auf einen zweiten linearen Förderer (45), indem diese in Richtung Aufgreifmittel (25) geführt werden; währenddessen treiben die Steuermittel die synchronisierten Versetzungen des zweiten Schiebemittels (41) an, um es in seine ursprüngliche Position und zu dem Produktträger (42) zu bringen, anschließend steuert das Steuermittel die Versetzung des letztgenannten Produktträgers (42), indem es ihn in seiner unteren Position positioniert und die Steuermittel warten, um einen Ausstoßzyklus von Produkten von dem nächsten Produktträger (42) aufzunehmen.

5. Anlage nach Anspruch 3, **dadurch gekennzeichnet, dass** das Aufgreifmittel (25) ein ringförmiges Fördermittel (51) umfasst, das ein erstes Ende und ein dem ersten Ende gegenüberliegendes zweites Ende aufweist; der erste lineare Förderer (21) und der zweite lineare Förderer (45) weisen entsprechende Endauslässe auf, die einander zugewandt und benachbart zu dem ersten Ende des ringförmigen Fördermittels (51) sind; das zweite Ende des ringförmigen Fördermittels (51) entspricht dem ersten Auslass (11) und das ringförmige Fördermittel (51) ist mit einer Mehrzahl vorstehender Klammerarme (55) versehen und verschiebt von den Auslassenden des linearen Förderers (21, 45) zu dem ersten Auslass (11), um zu den Produkten zu passen und diese von den Enden bis hin zu dem ersten Auslass (11) zu tragen, um diese Produkte zu dem Einlass des Transferzweigs (6) zu befördern.

6. Anlage nach Anspruch 4, **dadurch gekennzeichnet, dass** der erste lineare Förderer (21) und der zweite lineare Förderer (45) ausgerichtet sind und Förderrichtungen aufweisen, die entgegengesetzt und zulaufend in Richtung der entsprechenden und angrenzenden Auslässe sind und sich unterhalb der zweiten Schiebemitteln (41) und unterhalb der zweiten Gleitebene (43) des zweiten Einlasses (15) befinden, unterhalb des Zuführmittels (27) des zweiten Auslasses (13) und unterhalb des Aufgreifmittels (25); das zweite Schiebemittel (41) und die zweite Gleitebene (43) des zweiten Einlasses (15) sich unterhalb der ersten Gleitebene (35) und unterhalb der ersten Schiebemittel (37) des Zuführmittels (27) befinden; das Schaltermittel (23) erstreckt sich vertikal zwischen mindestens dem ersten linearen Förderer (21) und dem Zuführmittel (27); der Einlass und Auslass des sekundären Zweigs (5) sind in den oberen bzw. unteren Teilen des vertikalen Bereichs platziert, der die entsprechenden Bereiche des sekundären Zweigs (5) umfasst, wo die Produktträger (42) entlang des vertikalen Bereichs von unten nach oben verlaufen.

7. Anlage nach einem der vorhergehenden Ansprüche, **dadurch gekennzeichnet, dass** sie Positionssensoren der Produktträger entlang des vertikalen Bereichs von Einlass und Auslass des sekundären Zweigs (5) aufweist und Sensoren der vertikalen Position der ersten Gleitebene (35) oder der ersten Stützmittel (33), der zweiten Gleitebene (43) und/oder des zweiten Schiebemittels (41) und sie umfasst Positions- und/oder Geschwindigkeitsdetektoren der beweglichen und/oder der aktiven Elemente der Anlage.

8. Verfahren zum Bedienen und Führen von Halbmatrizen und/oder Matrizen zum Formen von Produkten wie Lebensmitteln aus Schokolade oder ähnlichen Materialien in der Anlage nach einem der vorhergehenden Ansprüche umfassend mindestens einen primären Zweig (3) für einen oder mehr Hauptprozesse oder Behandlungen der Produkte und einen sekundären Zweig (5) für einen oder mehr optionale Prozesse oder Behandlungen und einen Transferzweig (6) für die Produkte; und das Verfahren ist **gekennzeichnet durch**:
- Verwenden des primären Zweigs, der eine entsprechende Bewegungsrichtung der Produkte aufweist, die an seinem Auslass zur Verfügung gestellt werden;
- Verwenden des ringförmigen sekundären Zweigs, der eine Längserstreckung und eine Produktbewegungsrichtung aufweist, die im Wesentlichen geradlinig und länglich ist und einen entsprechenden Einlass und Auslass von Produkten aufweist, die an demselben Ende dieser Erstreckung platziert sind;
- Verwenden eines linearen Transferzweigs, der seinen eigenen Produkteinlass aufweist;
- Verwenden einer Führungsvorrichtung (7), deren erster Einlass (9) dem Auslass des primären Zweigs zugewandt ist, von dem sie die Produkte aufnimmt, wobei ein erster Auslass (11) dem Einlass des Transferzweigs zugewandt ist, an den sie die Produkte befördert und weist einen zweiten Auslass (13) und einen zweiten Einlass (15) auf, die dem Einlass bzw. Auslass des sekundären Zweigs für den entsprechende Durchlass von Produkten zugewandt sind;
- Führen der von dem primären Zweig kommenden Produkte mittels der Führungsvorrichtung in Richtung des Transferzweigs oder den sekundären Zweig.

9. Verfahren nach Anspruch 8, **gekennzeichnet durch** Führen der von dem primären Zweig kommenden Produkte mittels der Führungsvorrichtung in Richtung des Transferzweigs direkt oder **durch** den sekundären Zweig und/oder **gekennzeichnet durch** Bewegen der Produkte entlang des primären Zweigs und entlang des Transferzweigs.

## Revendications

1. - Installation de travail pour des produits comprenant une branche principale (3) qui comprend une sortie et ayant une direction de déplacement respective des produits sortant de celle-ci ; l'installation comprend une branche secondaire (5) du type ayant une extension longitudinale et une pluralité de supports de produits (42) pour déplacer ces produits dans une direction de déplacement bidirectionnelle principalement rectiligne et allongée ou en forme d'anneau et ayant une entrée et une sortie respectives pour les produits placées à la même extrémité de ladite extension ; l'installation comprend une branche de transfert linéaire (6) et ayant sa propre entrée pour les produits ; et elle comprend un dispositif d'acheminement (7) ayant :
- une première entrée (9) faisant face à la sortie de la branche principale (3) à partir de laquelle elle reçoit les produits ;
- une première sortie (11) faisant face à l'entrée de la branche de transfert (6) à laquelle elle fournit les produits ;
- une seconde sortie (13) faisant face à l'entrée de la branche secondaire (5) pour le passage des produits du dispositif d'acheminement (7) jusqu'aux supports de produits (42) de la branche secondaire (5) ;
- une seconde entrée (15) faisant face à la sortie de la branche secondaire (5) pour faire passer les produits des supports de produits (42) de la branche secondaire (5) jusqu'au dispositif d'acheminement (7) ;
- un moyen de commutation (23) qui peut être commandé pour envoyer les produits jusqu'à la première sortie (11) ou à la seconde sortie (13) ;
- un moyen de collecte (25) qui transfère les produits du dispositif d'acheminement (7) provenant de la première entrée (9) ou de la seconde entrée (15) à la première sortie (11) ;
la première entrée (9) comportant un premier convoyeur linéaire horizontal ou presque horizontal (21), orienté vers le moyen de commutation (23) ; ladite installation étant **caractérisée par le fait que** le premier convoyeur linéaire horizontal ou presque horizontal (21) comprend un élévateur motorisé (31) comportant un moyen de préhension (32) mobile verticalement sur commande entre trois états, un premier état dans lequel le moyen de préhension (32) est dans une position inférieure dans laquelle il est destiné à collecter au moins un des produits transportés par le premier convoyeur linéaire (21), un deuxième état dans lequel le moyen de préhension (32) est dans une position supérieure dans laquelle il fait passer l'au moins un produit à un moyen d'alimentation (27) de la seconde sortie (13) acheminant l'au moins un produit jusqu'à cette dernière seconde sortie (13), et un troisième état dans lequel le moyen de préhension (32) est élevé par rapport au premier convoyeur linéaire (21) et n'interfère pas avec les produits de ce dernier (21), permettant à ces derniers produits d'atteindre, successivement, le moyen de collecte (25), la première sortie (11) et l'entrée de la branche de transfert (6).

2. - Installation selon la revendication 1, **caractérisée par le fait que** le moyen d'alimentation (27) de la seconde sortie (13) comprend un premier moyen de support motorisé (33) mobile verticalement sur commande et ayant, en regard et en face, un premier moyen de coulissement plan (35) et un premier moyen de poussée (37) ; dans une position inférieure dudit premier moyen de support (33), le premier plan de coulissement (35) est aligné avec le moyen de préhension (32) dans sa position supérieure et le premier moyen de poussée (37) transfère l'au moins un produit du moyen de préhension (32) au premier plan de coulissement (35) qui peut recevoir un ou plusieurs produits côte à côte ; tandis que le premier moyen de support (33) déplace verticalement en translation le premier plan de coulissement (35) en le maintenant aligné avec un support de produits (42) mobile verticalement dans une partie verticale de la branche secondaire (5) faisant face à la seconde sortie (13) et correspondant à l'entrée de la branche secondaire (5), le premier moyen de poussée (37) transfère un ou plusieurs produits du premier plan de coulissement (35) au support de produits (42) de la branche secondaire (5).

3. - Installation selon la revendication 1 ou 2, **caractérisée par le fait qu'**elle comprend un moyen de commande numérique et programmable comportant des ports d'entrée pour des signaux fournis par des capteurs et des détecteurs d'organes ou de parties du dispositif d'acheminement (7) ou de toute l'installation pour commander et/ou actionner les éléments mobiles et/ou actifs au moins du dispositif d'acheminement (7).

4. - Installation selon la revendication 3, **caractérisée par le fait que** la seconde entrée (15) comprend un second moyen de poussée (41) et un second plan de coulissement (43) tous deux motorisés et mobiles verticalement sous la commande du moyen de commande et faisant face à une partie verticale de la branche secondaire (5) correspondant à la sortie de la branche secondaire (5) ; l'installation étant en outre configurée de telle sorte que le moyen de commande actionne des moteurs respectifs en déplaçant verticalement en translation le second moyen de poussée (41) et le second plan de coulissement (43) en les maintenant alignés avec un support de produits (42) mobile verticalement dans la section de sortie de la branche secondaire (5) et contenant un ou plusieurs produits, tandis que le moyen de commande actionne le second moyen de poussée (41) pour transférer ledit ou lesdits produits du support de produits (42) de la branche secondaire au second plan de coulissement (43), une fois que ce dernier second plan de coulissement a reçu ledit ou lesdits produits, le moyen de commande commande séquentiellement la translation verticale du second plan de coulissement (43) et l'opération d'avancée de ce dernier pour décharger ledit ou lesdits produits sur un second convoyeur linéaire (45) en les acheminant jusqu'à un moyen de collecte (25) ; pendant ce temps, le moyen de commande entraîne les déplacements synchronisés du second moyen de poussée (41) pour l'amener à sa position d'origine et au support de produits (42), ensuite le moyen de commande commande le déplacement de ce dernier support de produits (42) en le positionnant dans sa position inférieure et le moyen de commande est en attente pour reprendre un cycle d'expulsion de produit du support de produits suivant (42).

5. - Installation selon la revendication 3, **caractérisée par le fait que** le moyen de collecte (25) comprend un moyen de transport annulaire (51) ayant une première extrémité et une seconde extrémité opposée à la première extrémité ; le premier convoyeur linéaire (21) et le second convoyeur linéaire (45) ont des sorties d'extrémité respectives se faisant face et adjacentes à la première extrémité du moyen de transport annulaire (51) ; la seconde extrémité du moyen de transport annulaire (51) correspond à la première sortie (11) et ledit moyen de transport annulaire (51) comporte une pluralité de bras de soutien en saillie (55) et se déplaçant en translation desdites extrémités de sortie des convoyeurs linéaires (21, 45) jusqu'à la première sortie (11) pour mettre en correspondance et transporter les produits desdites extrémités jusqu'à la première sortie (11) pour fournir ces produits à l'entrée de la branche de transfert (6).

6. - Installation selon la revendication 4, **caractérisée par le fait que** le premier convoyeur linéaire (21) et le second convoyeur linéaire (45) sont alignés et ont des directions de transport qui sont opposées et convergent vers les sorties respectives et adjacentes et sont au-dessous du second moyen de poussée (41) et au-dessous du second plan de coulissement (43) de la seconde entrée (15), au-dessous du moyen d'alimentation (27) de la seconde sortie (13) et au-dessous du moyen de collecte (25) ; le second moyen de poussée (41) et le second plan de coulissement (43) de la seconde entrée (15) se trouvent au-dessous du premier plan de coulissement (35) et au-dessous du premier moyen de poussée (37) du moyen d'alimentation (27) ; le moyen de commutation (23) s'étend verticalement au moins entre le premier convoyeur linéaire (21) et le moyen d'alimentation (27) ; l'entrée et la sortie de la branche secondaire (5) sont placées respectivement dans les parties supérieure et inférieure de la partie verticale comprenant les parties respectives de la branche secondaire (5) où les supports de produits (42) se déplacent le long de ladite partie verticale de bas en haut.

7. - Installation selon l'une quelconque des revendications précédentes, **caractérisée par le fait qu'**elle comprend des capteurs de position des supports de produits le long de ladite partie verticale d'entrée et de sortie de la branche secondaire (5) et des capteurs de la position verticale du premier plan de coulissement (35) ou du premier moyen de support (33), du second plan de coulissement (43) et/ou du second moyen de poussée (41), et elle comprend des détecteurs de position et/ou de vitesse des éléments mobiles et/ou actifs de l'installation.

8. - Procédé de manipulation et d'acheminement de demi-matrices et/ou de matrices pour former des produits tels que des aliments en chocolat ou en matières similaires dans l'installation selon l'une quelconque des revendications précédentes, comprenant au moins une branche principale (3) pour un ou plusieurs processus ou traitements principaux des produits et une branche secondaire (5) pour un ou plusieurs processus ou traitements facultatifs et une branche de transfert (6) pour les produits ; ledit procédé est **caractérisé par** le fait de :
- utiliser la branche principale ayant une direction de déplacement respective des produits mis à disposition à sa sortie ;
- utiliser la branche secondaire de type annulaire ayant une extension longitudinale et une direction de déplacement de produits qui sont principalement rectilignes et allongées et ayant une entrée et une sortie respectives de produits placées à la même extrémité de cette extension ;
- utiliser une branche de transfert linéaire ayant sa propre entrée de produits ;
- utiliser un dispositif d'acheminement (7) ayant sa première entrée (9) faisant face à la sortie de la branche principale d'où il collecte les produits, une première sortie (11) faisant face à l'entrée de la branche de transfert à laquelle il transfère les produits et ayant une seconde sortie (13) et une seconde entrée (15) faisant respectivement face à l'entrée et à la sortie de la branche secondaire pour le passage correspondant des produits ;
- acheminer, au moyen du dispositif d'acheminement, les produits provenant de la branche principale jusqu'à la branche de transfert ou la branche secondaire.

9. - Procédé selon la revendication 8, **caractérisé par** le fait d'acheminer, au moyen du dispositif d'acheminement, les produits provenant de la branche principale jusqu'à la branche de transfert directement ou par l'intermédiaire de la branche secondaire et/ou de déplacer les produits le long de la branche principale et le long de la branche de transfert.
